Europäisches Patentamt

European Patent Office

Office européen des brevets

(19)

(11) Publication number: **0 079 315**
**B1**

# EUROPEAN PATENT SPECIFICATION

(12)

(45) Date of publication of patent specification: **07.05.86**

(51) Int. Cl.⁴: **A 01 D 90/08**, A 01 D 87/12

(21) Application number: **82830266.1**

(22) Date of filing: **22.10.82**

(54) **Loading and unloading machine for hay round balls and the like.**

(30) Priority: **27.10.81 IT 1092581 u**

(43) Date of publication of application:
**18.05.83 Bulletin 83/20**

(45) Publication of the grant of the patent:
**07.05.86 Bulletin 86/19**

(84) Designated Contracting States:
**AT BE CH DE FR GB IT LI NL SE**

(56) References cited:
**DE-A-3 001 283**
**GB-A-2 026 429**
**US-A-4 117 940**
**US-A-4 249 842**

(73) Proprietor: **"CRONOS" di BARALE Amedeo &
C.-S.a.S.
Via Torino 20
I-12045 Fossano, (Cuneo) (IT)**

(72) Inventor: **Garello, Luigi
Frazione Cervignasco Cascina Galatero
I-12037 Salutto (Cuneo) (IT)**

(74) Representative: **Buzzi, Franco et al
c/o Jacobacci-Casetta & Perani S.p.A.
Via Alfieri, 17
I-10121 Torino (IT)**

## Description

The present invention relates to machines for loading and unloading cylindrical bales of hay and the like.

More particularly, the invention refers to a loading and unloading machine of the type set forth in the preamble of claim 1.

A machine of the above mentioned type is disclosed in DE—A—3001283, wherein the support of the bale loading gripper is placed forward to the front end of the load-carrying platform, so as in its lowered pick-up position such loading gripper extends completely beyond the platform, side by side to the attachment member of the machine to the tractor. The rotation of the loading gripper between the lowered and the raised positions, in order to deposit the picked-up bale on the front end of the platform is accomplished by means of a rearward displacement, i.e. towards the rear end of the load-carrying platform.

With such construction bale pick-up and transfer operations induce extremely heavy loads on the attachment structure and drawbar of the machine, which necessarily need structual strengthening.

Moreover, the attachment structure must necessarily be of a considerable length, in order to avoid interference of the picked-up bale with the tractor, which results in a huge total length and weight of the machine with consequent manoeuvrability and travelling problems.

Last but not least, the above construction involves in operation dangerous instability and unbalancing problems of the machine in the vertical plane, owing to the long lever arm between the bale handled by the loading gripper and the vehicle axles.

The main object of the present invention is to overcome the above mentioned drawbacks.

Another object of the present invention is to provide a machine of the aforesaid type which has a simpler and more economical structure than the above mentioned known machine, and is such as to allow, in particular, the easy and safe lifting of the cylindrical bales from the ground, in the same direction as they have been deposited by a baling machine, and an equally easy and safe placing of the bales on the tilting platform.

According to the invention, this object is achieved by virtue of the features recited in the characterising part of claim 1.

Due to this feature, all the drawbacks of the above mentioned known machine are overcome, thus resulting in a simpler, shorter and safer from the stability and manoeuvrability view point machine.

Further characteristics and advantages of the invention will become apparent from the following detailed description, supplied purely by way of non-restrictive example with reference to the appended drawings, in which:

Figure 1 is a diagrammatic plan view which illustrates a machine according to the invention during use;

Figure 2 is a diagrammatic perspective view, of the machine on an enlarged scale;

Figure 3 is a partial cross-sectional view taken along the line III—III of Figure 2;

Figures 4 and 5 are two perspective views which show a detail of the machine on an enlarged scale in two different operating positions;

Figure 6 is a perspective view from below of the detail shown in Figures 4 and 5;

Figure 7 is a perspective view of a variant of the machine;

Figure 8 is a side elevational view of a part of Figure 7 in a different operating condition, and

Figure 9 is a perspective view of a detail of Figures 7 and 8 in an intermediate operating condition.

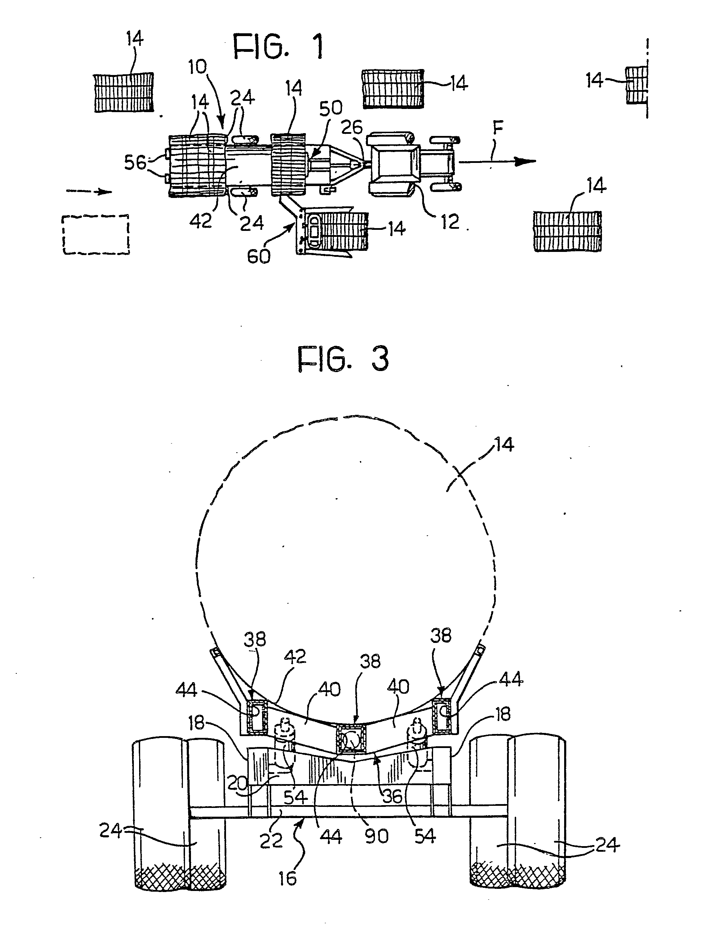

In Figure 1 there is generally indicated 10 a machine in the form of a wheeled trailer for towing by a tractor 12, which is arranged for the loading, in a field, of cylindrical bales 14 of straw or hay made by conventional baling apparatus and laid on the ground in rows. As shown in Figure 1, the trailer 10 towed by the tractor 12 proceeds in the direction of the arrow F parallel to, and laterally of, the rows of bales 14 in such manner as to pick up the bales and transfer them to a storage area where they will be unloaded to form stacks, as described below.

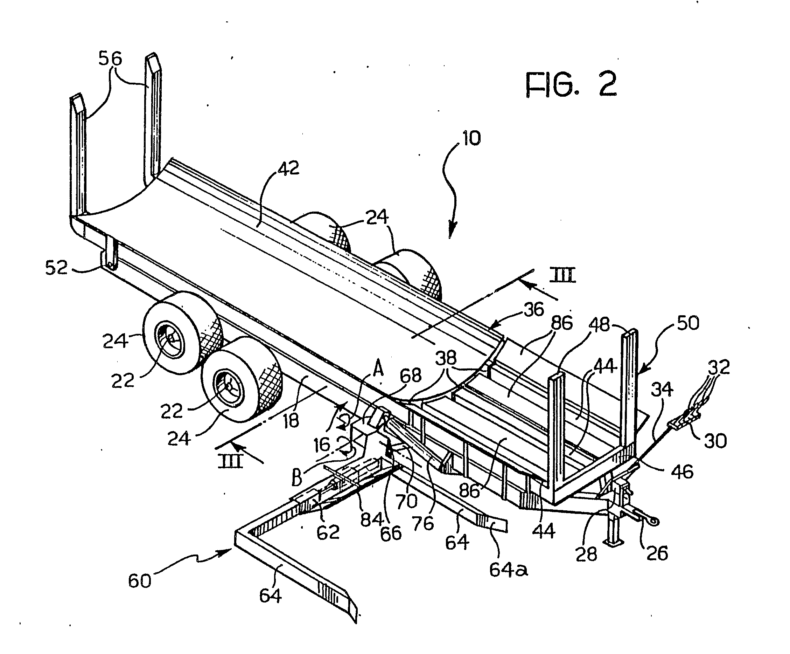

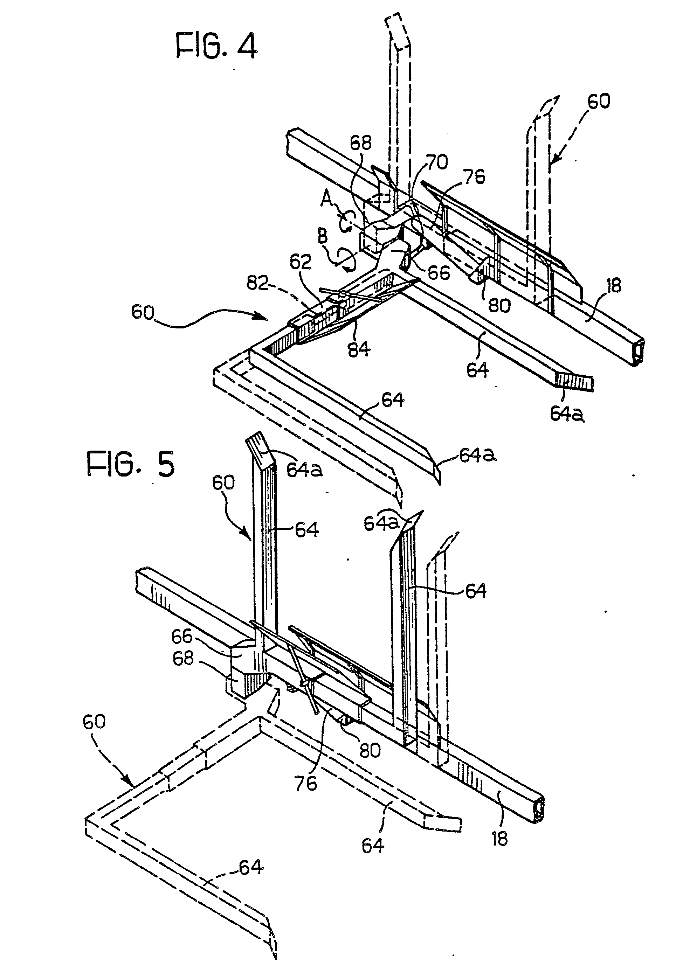

Referring now in greater detail to Figures 2 and 3, the trailer 10 comprises an elongate metal frame 16 which is formed from tubular main members 18 connected by cross members 20. The frame 16 is connected underneath to a pair of axles 22 bearing wheels 24 at their ends. As can be better seen in Figure 3, the gauge of the front wheels 24 is greater than that of the rear wheels.

The frame 16 is provided at its front end with an attachment member 26 which serves for its connection to a towing member (not shown) of the tractor 12 in a known manner, and with a hydraulic pump indicated diagrammatically 28, which is included in a hydraulic control circuit and is arranged so as to be activated by the power take-off of the tractor 12 in a known manner.

The hydraulic control circuit, which will be described in detail further on, comprises a distributor unit 30 which is operable by levers 32 and is carried by a telescopic arm 34 of adjustable inclination connected to the front end of the frame 16. It is clear that the levers 32 are conveniently accessible to the driver of the tractor 12.

The frame 16 supports at the top a tilting load carrying platform, generally indicated 36. As can be better seen in Figure 3, the structure of the load-carrying platform 36 comprises three tubular longitudinal members 38 which extend from the rear end of the trailer 10 to a certain distance from the front end. The longitudinal members 38 are connected by a series of cross-members 40 and by a curved plate 42 with a curvature corresponding substantially to that of the bales 14. Into the front ends of the three longitudinal members are slidably engaged three longitudinal members 44 connected by an end cross-member 46 to which are attached two vertical push rods 48. The longitudinal members 44, with the cross member 46 and the rods 48, constitute a pusher 50 which can be moved towards and away from the curved plate 42, in the manner described below, by using a hydraulic jack 90 housed within the central longitudinal member 38, the functioning of which is controlled by the distribution unit 30. It should be pointed out that in the withdrawn position of the pusher 50 shown in Figure 2, that is, in the condition of maximum length of the platform 36, the distance of the push rods 48 from the front end of the curved plate 42 is generally greater than the axial dimension of the bales 14.

The tilting platform 36 is articulated to the frame 16 at the rear about a transverse axis 52, so that it can rotate between a lowered receiving position shown in Figures 2 and 3, in which it is parallel to the frame 16, and a raised depositing position in which it extends upwardly perpendicular to the frame 16. The angular displacement of the platform 36 is controlled by a pair of hydraulic jacks, diagrammatically indicated 54 in Figure 3, which are also controlled by the distributor unit 30.

Opposite the pusher 50, the platform 36 is provided with a pair of vertical stop rods 56 carried by the two lateral longitudinal members 38.

A loading arm, generally indicated 60, is connected laterally to the frame 16 in the region of the pusher 50. As shown in greater detail in Figures 4 to 6, the loading arm 60 is formed by a U-shaped gripper comprising an extendible yoke 62 of the telescopic type and two gripping arms 64 directed perpendicular to the yoke 62 and having free ends 64a which diverge from each other.

The yoke 62 has a lateral projection 66 articulated to a rotating support 68 about an axis A lying in a vertical plane parallel to the longitudinal axis of the trailer 10. The support 68 is articulated, in its turn, to the corresponding main member 18 of the frame 16 about an axis B transverse to the longitudinal axis of the trailer 10 and hence perpendicular to the axis A.

The projection 66 of the yoke 62 is connected to the frame 16 by an adjustable tie rod 70 which has one end 72 articulated to the projection 66 and its opposite end articulated to a coupling 74 fixed below the main member 18 in a position spaced from the support 68 and displaced towards the front end of the trailer 10.

A hydraulic jack 76 is located adjacent the main member 18 and has one end articulated to a coupling 78 fixed to the support 68, and its opposite end articulated to a coupling 80 fixed to the main member 18 in front of the coupling 74 of the tie rod 70. The jack 76 is connected to the hydraulic circuit of the trailer 10 and is thus controlled by the distributor unit 30.

When the jack 76 is in its contracted position (Figures 4 and 6), the gripper 60 is in a lowered position in which it extends parallel to the platform 36, with the yoke 62 directed transversely of the platform 36 and the two arms 64 horizontal.

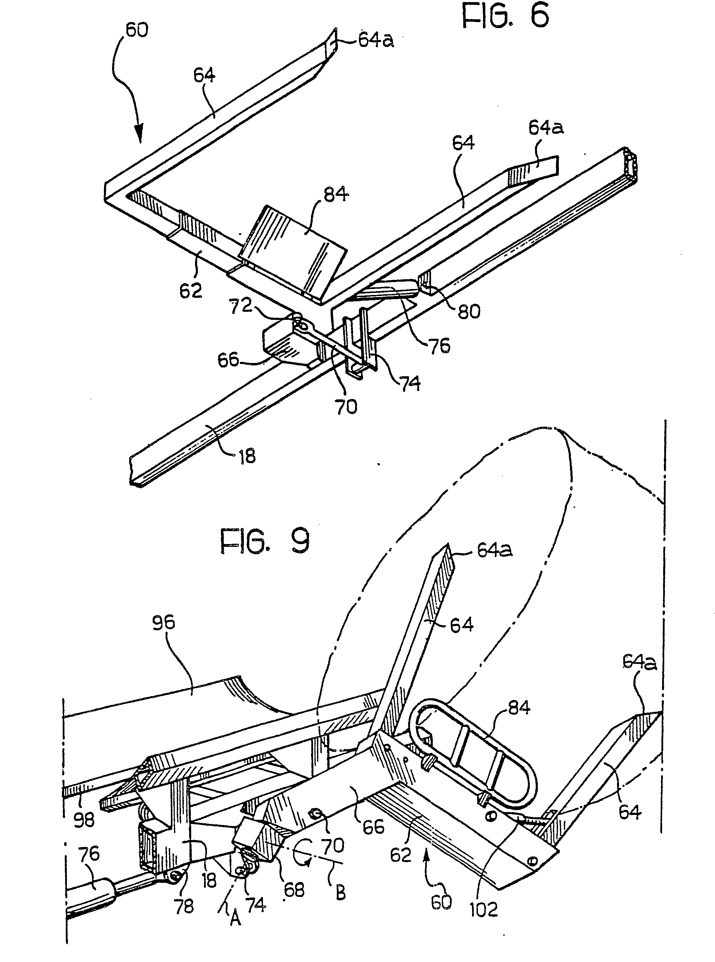

On the other hand, when the jack 76 is in its extended position (Figure 5), the gripper 60 is in a raised position in which it extends perpendicular to the platform 36, with the yoke 62 parallel to the platform 36 and the two arms 64 vertical. It can easily be understood that the change-over from the lowered to the raised position, and vice versa, is effected by a simple operation of the jack 76 which causes a 90° rotation of the support 68, and hence the gripper 60, about the axis B, while a 90° rotation of the gripper 60 about the axis A occurs at the same time due to the presence of the tie-rod 70.

It should be pointed out that the tie-rod 70 could be replaced by a functionally equivalent device, such as, for example, a second hydraulic jack or a pair of gears arranged so as to effect a rotation of the gripper 60 about the axis A at the same time as its rotation about the axis B. The solution described above should be considered as the preferred one, however, for reasons of simplicity and economy in its realisation.

By virtue of the telescopic form of the yoke 62, the two arms 64 of the gripper 60 can be moved relative to each other between a closed, drawn-together position shown by a solid line in Figures 4 and 5 and an open, spaced-apart position shown by a broken line in the said Figures. The movement is effected by a hydraulic jack, diagrammatically indicated 82 in Figure 4, which is housed within the yoke 72 and the functioning of which is controlled by the distributor unit 30.

Clearly the telescopic structure of the yoke 62 also permits the width of the gripper 60 to be adjusted to the dimensions of the bales 14.

On to the yoke 62 there is fitted a rocking retaining board 84 which is subject to the action of resilient means (not shown) which tend to resist its movement towards the outside of the gripper 60.

It will be clear from what has gone before, that in use of the machine described above, the gripper 60 is able to pick up the bales 14 from the ground and place them directly on to the load-carrying platform 36. In fact, when the tractor 12 is being driven towards a bale 14 which is to be picked up, the gripper 60 is kept in the lowered position, as in Figures 2, 4 and 6, with the arms 64 in the open position. When the bale 14 is introduced between the two arms 64, abutting the board 84, the jack 82 is actuated in such a manner as to cause the closure of the arms 64 and then the jack 76 is extended whereby the bale 14 gripped between the two arms 64 is raised and, at the same time, rotated so that it is arranged with its axis parallel to the longitudinal axis of the trailer 10. During this operation, the board 84 prevents the bale 14 from slipping and accidentally becoming released from the gripper 60.

As soon as the gripper 60 reaches its raised position shown in Figure 5, the two arms 64 are opened by the jack 82, thus allowing the bale 14 to be deposited on the pulley platform 36 in the region of the pusher 50. In order to ensure the correct positioning of the bale 14, the frame 16 may, with advantage, be provided with inclined lateral guide slides 86 in this zone.

At this point, the gripper 60 is returned to its lowered position, while the jack 90 is activated to move the pusher 50 towards the curved plate 42, pushing the bale 14 thereon towards the rear end of the platform 36.

These operations are repeated until the platform 36 is filled, that is, until there is a complete row of bales 14 in the region between the rear retaining rods 56 and the push rods 48 of the pusher 50.

Once loading is complete, the trailer 10 is taken to the collection and storage area where the row of bales 14 is unloaded by tilting the platform 36 from the horizontal position shown in the drawings to the vertical position for depositing the bales, by the operation of the two jacks 54.

It should be pointed out that the working length of the load-carrying platform 36 can be reduced according to the requirements of use simply by moving the push rods 48 of the pusher 50 closer to the curved plate 42. Advantageously, this allows the trailer 10 to be adapted to the most varied requirements of use.

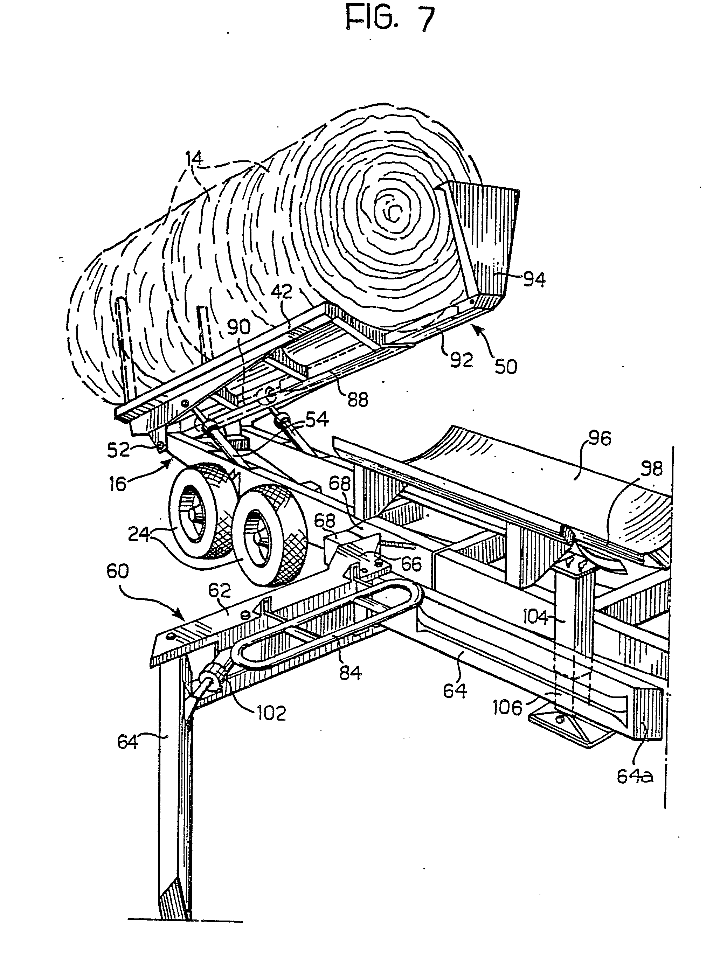

The variant of the machine shown in Figures 7 to 9 is, in general, similar to the embodiment described above, and only the differences will be described in detail using the same reference numerals for identical or similar parts.

In this variant, instead of three tubular longitudinal members 38, the platform 36 comprises a single central tubular longitudinal member 88 which carries the curved plate 42 and contains the jack 90 for operating the pusher 50. In this turn, this pusher 50 comprises a single main member 92 which is slidably mounted in the front end of the longitudinal member 88, and a pusher plate 94. In the region of the platform 36 across which the pusher 50 moves, there is provided a cradle 96 with a curvature corresponding to that of the curved plate 42, which is fixed to the frame 16 and has a longitudinal groove 98 at its centre for passage of the pusher plate 94.

In this case, the yoke 62 of the gripper 60 is inextensible and the movable arm 64 of the gripper 60 is able to swing relative to the yoke 62. In this case, in fact, the arm 64 is articulated at 100 to the end of the yoke 62 opposite the other arm 64, and a hydraulic jack 102 is provided to effect the angular movement of the movable arm 64 between the closed position of the gripper 60, in which the movable arm 64 is parallel to the other arm 64, and the open position in which the movable arm 64 diverges outwardly. Naturally, the jack 102 is controlled from the distributor unit 30.

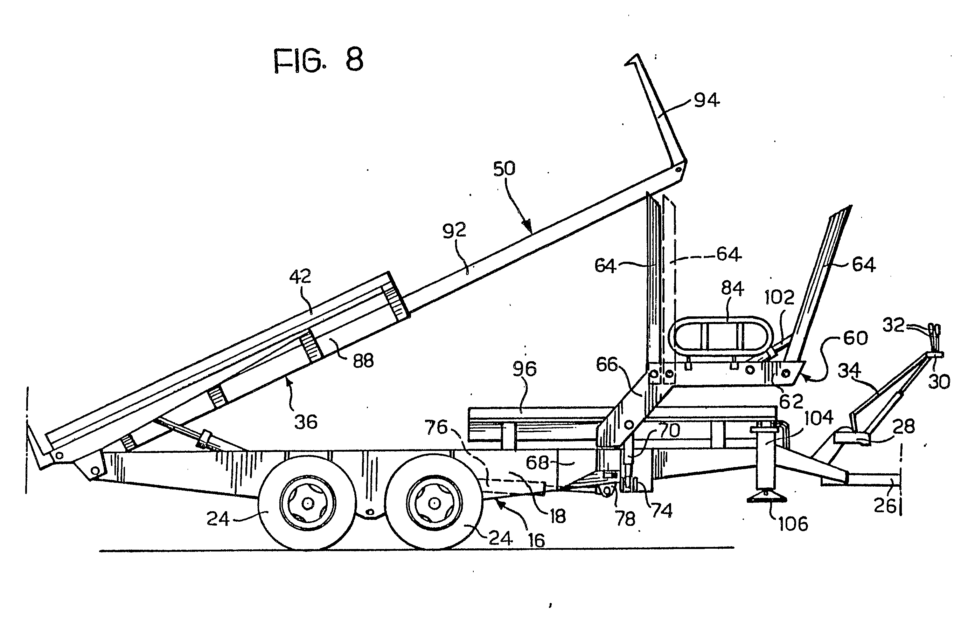

It should be pointed out that the fixed arm 64 can be fitted to the yoke 62 in at least two different positions, shown by a solid line and a broken line in Figure 8, for the purpose of varying the width of the gripper 60 according to the sizes of the bales 14.

In this case, the connection of the gripper 60 to the frame 16 is practically identical to that described above. In this case, however, the jack 76 extends towards the rear end of the platform 36 on the inside of the frame 16 and hence in a more protected position.

Finally, in this variant, a hydraulic stabiliser is provided, which is fixed to the frame 16 in front of the gripper 60 and is connected to the hydraulic circuit of the trailer 10. The stabiliser 104 includes a bearing foot 106 which is movable vertically for lowering during the stage of loading the bales 14 onto the platform 36, so as to stabilise the trailer 10 during this operation.

The operation of the machine according to this variant is exactly the same as that described above and, in this case, also the gripper 60 undergoes two simultaneous rotations of 90° about the axes A and B respectively, during loading of the bales 14. Figures 7 and 8 show the gripper 60 in its lowered and raised positions respectively, while Figure 9 shows the gripper 60 in an intermediate position during its rotation.

Naturally, it is possible to foresee numerous variations to the construction of the machine according to the invention, without nevertheless going beyond the following claims.

**Claims**

1. Machine for loading and unloading cylindrical bales of hay and the like, comprising a wheeled machine (10) with a frame (16) bearing a load-carrying platform (36) which can be tilted between a lowered position for receiving a row of bales (14) and a raised position for unloading the bales (14), loading means (60) for picking up the bales (14) from the ground and loading them onto the front end (50) of the platform (36), a pusher (50) located at the said front end of the platform (36) and movable parallel to the latter so as to push the bales (14) towards the other end of the platform (36), the said loading means including a gripper (60) having a yoke (62) and two arms (64) which can be opened out, which is arranged laterally to the load-carrying platform and is rotatable about a first axis (B) which is horizontal and transverse to the longitudinal axis of the platform (36) and about a second axis (A) perpendicular to the first axis (B), being therefore pivoted about one of the axes to a support (68) which in turn is pivoted to the frame (16) about the other of said axes, and control means (76, 70) comprising at least first means (76) for effecting the angular displacement of the gripper (60) about the said first axis (B) between a lowered pick-up position in which the arms (64) of the gripper (60) extend substantially parallel to the platform (36) and a raised position in which the arms (64) of the gripper (60) are substantially perpendicular to the platform (36), and second means (70) for effecting the simultaneous rotation of the gripper (60) about the said second axis (A) between a receiving position corresponding to the lowered position, in which the yoke (62) of the gripper (60) is transverse to the platform (36), and a depositing position corresponding to the raised position, in which the yoke (62) of the gripper (60) is substantially parallel to the platform (36), characterized in that the loading gripper (60) has a lateral connection projection (66) articulated to the support (68) about the second axis (A), which is horizontal in the said lowered position of the gripper (60), in that the support (68) is spaced rearward to the said front end (50) of the load-carrying platform (36), and in that the said control means (76, 70) operate in such a way that the gripper (60), during rotation thereof about the said first axis (B) from the lowered position to the raised position, rotates about the said second axis (A) forwardly from the receiving position to the depositing position, whereby in the said depositing position the yoke (62) of the gripper (60) extends between the said support (68) and the front end (50) of the frame (16).

2. A machine according to Claim 1, characterized in that the control means include, as first means, a fluid pressure jack (76) having one end articulated to the frame (16) and its opposite end articulated to the support (68), and, as second means, a tie-rod (70) having one end articulated to the lateral connecting projection (66) of the gripper (60) and its opposite end articulated to the frame (16) of the vehicle (10) between the said support (68) and the front end of the frame (16).

3. A machine according to Claim 1 or Claim 2, characterized in that the load-carrying platform (36) is axially adjustable between an extended position and a shortened position.

4. A machine according to Claim 3, characterized in that the front end of the load-carrying platform (36) is formed by the pusher (50) which is telescopically movable with respect to the remaining part (38, 42; 88, 96) of the said platform (36) so as to push the bales (14) towards the rear end of the platform (36) during loading operations, and to adjust the length of the platform (36) at the end of loading operations.

5. A machine according to Claim 1, characterized in that the yoke (62) of the gripper (60) is extendible telescopically, and in that a fluid-pressure jack (82) is provided for effecting the opening and closing of the gripper (60) by extension and contraction of the telescopic yoke (62).

6. A machine according to Claim 1, characterized in that one of the arms (64) of the gripper (60) is articulated to the yoke (62), and in that a fluid-pressure jack (102) is provided for effecting the angular movement of the arm (64) between a closed position of the gripper (60), in which the arm (64) is parallel to the other arm (64), and an open position in which the arm (64) diverges from the other arm (64).

7. A machine according to Claim 6, characterized in that the yoke (62) of the gripper (60) carries a rocking board (84) which acts as a stop for the bales (14) during movement of the gripper (60) between the lowered and raised positions.

8. A machine according to Claim 1, characterized in that the frame (16) of the wheeled vehicle (10) is provided laterally of the load-carrying platform (36) in the region of the gripper (60), with a stabiliser foot (106) which is movable between a raised rest position and a lowered position for bearing on the ground.

9. A machine according to Claim 1, characterized in that the loading platform (36) has, over at least the greater part of its length, a concave bearing surface (42, 96) with a curvature corresponding substantially to that of the cylindrical bales (14).

10. A machine according to Claim 1, characterized in that the wheeled vehicle (10) is in the form of a trailer which can be towed by a tractor (12).

**Revendications**

1. Machine de chargement et de déchargement de balles de foin cylindriques et similaires comportant un engin à roues (10) avec un chassis (16) supportant une plateforme porte-charges (36) que l'on peut incliner entre une position basse pour la réception d'une rangée de balles (14) et une position haute pour le déchargement des balles (14), des moyens de chargement (60) permettant de prendre les balles (14) au sol et de les charger sur l'extrémité avant (50) de la plateforme (36), un poussoir (50) situé à ladite extrémité avant de la plateforme (36) et déplaçable parallèlement à cette dernière de façon à pousser les balles (14) vers l'autre extrémité de la plateforme (36), lesdits moyens de chargement comprenant une pince (60) équipée d'un manchon (62) et de deux bras (64) qui peuvent être ouverts, pince qui est disposée latéralement par rapport à la plateforme porte-charge et peut pivoter autour d'un premier axe (B) horizontal et transversal à l'axe longitudinal de la plateforme (36) et autour d'un second axe (A) perpendiculaire au premier axe (B), que l'on fait pivoter autour de l'un des axes vers un support (68) qui, à son tour, pivote vers le chassis (16) autour de l'autre axe et des moyens de contrôle (76, 70) comprenant au moins des premiers moyens (76) pour effectuer le déplacement angulaire de la pince (60) autour dudit premier axe (B) entre une position basse de prise dans laquelle les bras (64) de la pince (60) s'étendent sensiblement parallèlement à la plateforme (36) et une position haute dans laquelle les bras (64) de la pince (60) sont sensiblement perpendiculaires à la plateforme (36), et des seconds moyens (70) permettant la rotation simultanée de la pince (60) autour dudit second axe (A) entre une position de réception correspondant à la position basse, dans laquelle le manchon (62) de la pince (60) est essentiellement parallèle à la plateforme, caractérisée en ce que la pince de chargement (60) comporte une prolongement latéral d'assemblage (66) articulé au support (68) autour du second axe (A) qui est horizontal dans ladite position basse de la pince (60), en ce que le support (68) est situé à l'arrière de ladite extrémité avant (50) de la plateforme porte-charges (36) et à distance de celle-ci et en ce que lesdits moyens de contrôle (76, 70) travaillent de telle sorte que la pince (60), pendant sa rotation autour dudit premier axe (B) de la position basse à la position haute, tourne autour du second axe (A) vers l'avant depuis la position de réception jusqu'à la position de dépôt, le manchon (62) de la pince (60) dans ladite position de dépôt, s'étendant entre ledit support (68) et l'extrémité avant (50) du châssis (16).

2. Machine selon la revendication 1, caractérisée en ce que les moyens de contrôle comportent, comme premier moyen, un vérin à pression de fluide (76) dont une extrémité est articulée au châssis (16) et l'autre extrémité est artculée au support (68) et, comme second moyen, une barre d'accouplement (70) dont une extrémité est articulée au prolongement latéral d'assemblage (66) de la pince (60) et l'extrémité opposée est articulée au châssis (16) du véhicule (10) entre ledit support (68) et l'extrémité avant du châssis (16).

3. Machine selon la revendication 1 ou la revendication 2, caractérisée en ce que la plateforme porte-charges (36) est réglable axialement entre une position allongée et une position raccourcie.

4. Machine selon la revendication 3, caractérisée en ce que l'extrémité avant de la plateforme porte-charges est formée par le poussoir (50) déplaçable télescopiquement par rapport à la partie restante (38, 42; 88, 96) de ladite plateforme (36) de façon à pousser les balles (14) vers l'extrémité arrière de la plateforme (36) pendant les opérations de chargement et à régler la longueur de la plateforme (36) à la fin des opérations de chargement.

5. Machine selon la revendication 1, caractérisée en ce que le manchon (62) de la pince (60) peut s'allonger télescopiquement et en ce qu'un vérin à pression de fluide (82) est prévu pour assurer l'ouverture et la fermeture de la pince (60) par allongement et contraction du manchon télescopique (62).

6. Machine selon la revendication 1, caractérisée en ce que l'un des bras (64) de la pince (60) est articulé au manchon (62) et en ce qu'un vérin à pression de fluide est prévu pour assurer le déplacement angulaire du bras (64) entre une position fermée de la pince (60) dans laquelle le bras (64) est parallèle à l'autre bras (64) et une position ouverte dans laquelle le bras (64) diverge de l'autre bras (64).

7. Machine selon la revendication 6, caractérisée en ce que le manchon (62) de la pince (60) supporte une planche basculante (84) qui agit comme butoir pour les balles (14) pendant le déplacement de la pince (60) entre les positions basse et haute.

8. Machine selon la revendication 1, caractérisée en ce que le châssis (16) du véhicule à roues (10) est équipé, sur le côté de la plateforme porte-charges (36), dans la région de la pince (60), d'un pied stabilisateur (106) déplaçable entre une position haute de repos et une position basse d'appui sur le sol.

9. Machine selon la revendication 1, caractérisée en ce que la plateforme porte-charges (36) comporte, sur au moins la plus grande partie de sa longueur, une surface portante concave (42, 96) dont la courbure correspond sensiblement à celle des balles cylindriques (14).

10. Machine selon la revendication 1, caractérisée en ce que le véhicule à roues (10) est une remorque qui peut être tirée par un tracteur (12).

**Patentansprüche**

1. Gerät zur Ladung und Entladung zylindrischer Heuballen und dergleichen, umfassend ein mit Rädern versehenes Gerät (10) mit einem Rahmen (16), der eine lasttragende Plattform (36) trägt, die zwischen einer herabgelassenen Stellung zur Aufnahme einer Reihe von Ballen (14) und einer angehobenen Stellung zur Entladung der Ballen (14) geneigt werden kann, eine Ladevorrichtung (60) zur Aufnahme der Ballen (14) vom Boden und zur Ladung dieser auf das Vorderende (50) der Plattform (36), einen Schieber (50), der am genannten Vorderende der Plattform (36) liegt und parallel zu letzterer bewegbar ist, um die Ballen (14) gegen das andere Ende der Plattform (36) zu schieben, wobei die genannte Ladevorrichtung einen Greifer (60) mit einem Joch (62) und zwei Armen (64), die aufgeweitet werden können, enthält, der seitlich der lasttragenden Plattform angeordnet ist und um eine erste Achse (B), die horizontal und transversal zur longitudinalen Achse der Plattform (36) ist, und um eine zweite, auf die erste Achse (B) senkrechte Achse (A) drehbar ist, wobei er deshalb um eine der Achsen schwenkbar an einen Träger (68) gelagert ist, der seinerseits um die andere der genannten Achsen schwenkbar am Rahmen (16) gelagert ist, und Steuervorrichtungen (76, 70), die zumindest eine erste Vorrichtung (76) umfassen, um die Winkelverstellung des Greifers (60) um die genannte erste Achse (B) zwischen einer herabgelassenen Aufnahmestellung, in der sich die Arme (64) des Greifers (60) im wesentlichen parallel zur Plattform (36) erstrecken, und einer angehobenen Stellung, in der die Arme (64) des Greifers im wesentlichen senkrecht zur Plattform (36) sind, zu bewirken, und eine zweite Vorrichtung (40) umfassen, um die gleichzeitige Rotation des Greifers (60) um die genannte zweite Achse (A) zwischen einer der herabgelassenen Stellung entsprechenden Aufnahmestellung, in der das Joch (62) des Greifers (60) transversal zur Plattform (36) ist, und einer der angehobenen Stellung entsprechenden Absetzstellung, in der das Joch (62) des Greifers (60) im wesentlichen parallel zur Plattform (36) ist, zu bewirken, dadurch gekennzeichnet, daß der ladende Greifer (60) einen seitlichen, um die zweite Achse (A) gelenkig am Träger (68) gelagerten Verbindungsvorsprung (66) hat, der horizontal in der herabgelassenen Stellung des Greifers (60) ist, daß der Träger (68) mit Abstand hinter dem genannten Vorderende (50) der lasttragenden Plattform (36) angeordnet ist, und daß die genannten Steuereinrichtungen (76, 70) in einer solchen Weise arbeiten, daß der Greifer (60) während seiner Rotation um die genannte erste Achse (B) von der herabgelassenen Stellung in eine angehobene Stellung vorwärts um die genannte zweite Achse (A) von der Aufnahmestellung in die Absetzstellung rotiert, wobei sich das Joch (62) des Greifers (60) in der genannten Absetzstellung zwischen dem genannten Träger (68) und dem Vorderende (50) des Rahmens (16) erstreckt.

2. Gerät nach Anspruch 1, dadurch gekennzeichnet, daß die Steuereinrichtungen als erste Vorrichtung einen Druckfluid-Heber (76) enthalten, der ein Ende gelenkig am Rahmen gelagert hat und sein gegenüberliegendes Ende gelenkig am Träger (68) gelagert hat, und als zweite Vorrichtung eine Zugstange (70) enthalten, die ein Ende gelenkig am seitlichen Verbindungsvorsprung (66) des Greifers (60) gelagert hat und ihr gegenüberliegendes Ende am Rahmen (16) des Fahrzeuges (10) zwischen dem genannten Träger (68) und dem Vorderende des Rahmens (16) gelenkig gelagert hat.

3. Gerät nach Anspruch 1 oder 2, dadurch gekennzeichnet, daß die lasttragende Plattform (36) axial zwischen einer verlängerten und einer verkürzten Stellung einstellbar ist.

4. Gerät nach Anspruch 3, dadurch gekennzeichnet, daß das Vorderende der lasttragenden Plattform (36) durch den Schieber (50) gebildet ist, der bezüglich des restlichen Teiles (38, 42; 88, 96) der genannten Plattform (36) teleskopisch bewegbar ist, um die Ballen (14) während der Ladeoperationen gegen das Hinterende der Plattform (36) zu schieben und um die Länge der Plattform (36) am Ende der Ladeoperationen einzustellen.

5. Gerät nach Anspruch 1, dadurch gekennzeichnet, daß das Joch (62) des Greifers (60) teleskopisch ausziehbar ist und daß ein Druckfluid-Heber (82) vorgesehen ist, um das Öffnen und Schließen des Greifers (60) durch Ausziehen und Zusammenziehen des teleskopischen Joches (62) zur bewirken.

6. Gerät nach Anspruch 1, dadurch gekennzeichnet, daß einer der Arme (64) des Greifers (60) gelenkig am Joch (62) gelagert ist, und daß ein Druckfluid-Heber (102) vorgesehen ist, um die Winkelbewegung des Armes (64) zwischen einer geschlossenen Stellung des Greifers (60), in der der Arm (64) parallel zum anderen Arm (64) ist, und einer offenen Stellung zu bewirken, in der der Arm (64) vom anderen Arm divergiert.

7. Gerät nach Anspruch 6, dadurch gekennzeichnet, daß das Joch (62) des Greifers (60) eine hin- und herbewegliche Tafel (84) trägt, die als Anschlag für die Ballen (14) während der Bewegung des Greifers (60) zwischen der herabgelassenen und der angehobenen Stellung fungiert.

8. Gerät nach Anspruch 1, dadurch gekennzeichnet, daß der Rahmen (16) des mit Rädern versehenen Fahrzeuges (10) seitlich der lasttragenden Plattform (36) im Bereich des Greifers (60) mit einem Stabilisatorfuß (106) versehen ist, der zwischen einer angehobenen Ruhestellung und einer herabgelassenen Stellung zum Tragen auf dem Boden bewegbar ist.

9. Gerät nach Anspruch 1, dadurch gekennzeichnet, daß die Lade-Plattform (36) zumindest über einen Großteil ihrer Länge eine konkave Tragoberfläche (42, 96) mit einer Krümmung hat, die im wesentlichen der der zylindrischen Ballen (14) entspricht.

10. Gerät nach Anspruch 1, dadurch gekennzeichnet, daß das mit Rädern versehene Fahrzeug (10) in der Form eines Anhängers ausgebildet ist, der durch einen Traktor (12) gezogen werden kann.

# FIG. 1

# FIG. 3

1

FIG. 2

FIG. 4

FIG. 5

FIG. 6

FIG. 9

4

# FIG. 7

FIG. 8

0 079 315